# EUROPEAN PATENT SPECIFICATION

(11) **EP 3 626 436 B1**
(45) Date of publication and mention of the grant of the patent: **01.06.2022**
(21) Application number: 18195133.6
(22) Date of filing: 18.09.2018
(51) Int. Cl.: B29C 64/364, B22F 12/17, B22F 12/00, B29C 64/236

(54) **DEVICE FOR ADDITIVE MANUFACTURING AND METHOD FOR MANUFACTURING THE DEVICE**
VORRICHTUNG ZUR GENERATIVEN FERTIGUNG UND VERFAHREN ZUR HERSTELLUNG DER VORRICHTUNG
DISPOSITIF DE FABRICATION ADDITIVE ET PROCÉDÉ DE FABRICATION DU DISPOSITIF

(43) Date of publication of application: 25.03.2020
(73) Proprietor: miniFactory Oy LTD, 60320 Seinäjoki (FI)
(72) Inventor: MÄKI, Markus, 60100 SEINÄJOKI (FI); PIHLAJAMÄKI, Janne, 60720 TUOMIKYLÄ (FI)
(74) Representative: Berggren Oy

(56) References cited:
- EP-A1- 3 202 574
- WO-A1-00/78519
- WO-A1-2017/196324
- WO-A1-2018/038749
- WO-A1-2018/039370

## Description

### FIELD OF THE INVENTION

The present invention relates in general the devices and apparatuses for additive manufacturing of physical objects, such as to three-dimensional (3D) printing devices. In particular, however not exclusively, the present invention concerns arrangements for thermal insulation utilized in such devices.

### BACKGROUND

Known 3D printing devices typically have chamber in which the printing occurs. The chamber may be equipped with a heating element which is used to increase the temperature of the chamber. In some known solutions, the chamber can be thermally insulated.

In many known solutions the lack of thermal insulation leads to significant energy losses and to uneven or suboptimal temperature conditions for the printing, such as for certain printing material. In solutions having the thermal insulation, the arrangement for providing the thermal insulation is complex and prone to wear and tear. Furthermore, in the known solutions the thermal insulation is such a portion of the chamber that it is difficult to maintain or replace when broken.

Document WO 2018/038749 A1 presents an additive manufacturing system for printing three-dimensional parts. The system includes a build chamber having an opening with first and second opposing edges, and a platen in the build chamber. The system further includes a baffle door expandable across the opening. The baffle door insulates the build chamber.

Document WO 2017/196324 A1 presents an apparatus including a carriage to carry a payload through a manufacturing space at the urging of control elements in a control space and a belt movable with the carriage to block contaminants in the manufacturing space from passing to the control space along a carriage travel path.

### SUMMARY

An objective of the present invention is to provide a device for additive manufacturing and a method for manufacturing the device. Another objective is that the device comprises a thermally insulated chamber.

The objectives of the invention are reached by a device and a method as defined by the respective independent claims.

According to a first aspect, a device for additive manufacturing, such as a 3D printer, according to the appended claim 1 is provided. The device comprises a chamber comprising an opening in a wall of the chamber. The wall may be, for example, portion of the cover of the chamber. The opening defines a surface having a surface normal. The device further comprises a dispensing unit comprising an outlet and an inlet, such as for the material used in the additive manufacturing, for example, polymer, such as plastic, or metal filaments. The dispensing unit is arranged to be moved in the opening at least in a first direction with respect to the chamber, wherein the first direction is perpendicular to the surface normal. Furthermore, the device comprises at least one insulating element arranged to be moved with respect to the chamber in the first direction in response to a movement of the dispensing unit in the first direction, and to at least partly cover the opening for providing insulation.

Additive manufacturing, as referred to herein, may entail, for example, producing a physical object by depositing material such as to "grow" the object to be manufactured. This may entail, for example, depositing material layer by layer in order to obtain the desired, typically, 3D object. However, the various embodiments presented herein may also be utilized in connection with various other additive manufacturing techniques. The materials utilized for additive manufacturing may be, for example, polymers, fiber reinforced polymer composites or metals, such as steel, for example, as powder. Regarding polymers, such as plastics, there are several different types available which may be utilized in connection with the device according to various embodiments described herein. Different types of polymers may exhibit different properties such as related to glass transition temperature and melting point. Examples of utilizable polymers may be Acrylonitrile butadiene styrene (ABS) or Polyethylene terephthalate (PET) or Poly(lactic acid) (PLA). Some further examples may be ultra polymers, such as polyimide (PI), polyamideimide (PAI), polyether ether ketone (PEEK), polyetherketoneketone (PEKK); high performance polymers, such as polyethylenimine (PEI), polifenilsulfone (PPSU); mid-range polymers, such as polycarbonate (PC), polyamide (PA), polyoxometalate (POM).

In the dispensing unit, the material, such as polymer, fiber reinforced polymer composites or metal, may get drawn in from the inlet, melted, and pushed out from the outlet. However, especially in case of metals, the metal may be in a powder form and then the object may be printed by, for example, laser sintering. The outlet is arranged to be hotter than the inlet. There may preferably be a motor arranged in connection with the inlet that is configured to input material into the dispensing unit and for pushing it through the dispensing unit from the outlet. The outlet, when in use, may preferably be arranged into the chamber. In some embodiments, such as utilizing laser sintering, the outlet may comprise a laser device.

The at least one insulating element may comprise a surface which is at least 50 percent, 75 percent or 100 percent of the size of a surface of an open part of the opening, wherein the open part is the part not occupied or covered by the dispensing unit.

The at least one insulating element is arranged to be moved as a whole with respect to the chamber. This essentially entails that the element is not attached or fixed with respect to the chamber at any point of the element, that is, all points of the insulating element move with respect to the chamber when being moved.

The at least one insulating element may be a strip, such as a strip of any material. However, the strip may be flexible, such as of flexible material. Alternatively or in addition, the strip may be of thermally insulating material. The term "thermally insulating material" refers herein to materials having substantially thermally insulating properties such as rubber or polyurethane. The thermally insulating material may comprise multiple layers, such as having an outermost layer of aluminum for reducing the amount of heat radiating out of the chamber. Some examples regarding the material of the insulating element may be aluminum alloys, silicone (polymers), fluoroelastomer, mineral fiber, glass fiber, and carbon fiber.

The insulating element may be arranged fixedly from a first end with respect to the dispensing unit. The insulating element may, alternatively or in addition, be arranged fixedly from a second end, opposite to the first end, with respect to the dispensing unit. Preferably, the first and the second end may be attached or arranged fixedly on opposite sides of the dispensing unit. "Fixedly" refers herein to a direct contact, that is the insulating element may be attached to the dispensing unit from the first and/or the second end, or contact through a support element.

The at least one insulating element may comprise at least two insulating elements which are arranged essentially in opposite sides of the dispensing unit to cover the parts of the opening on said opposite sides of the dispensing unit. Both of the said elements may preferably be arranged to be moved with respect to the chamber in the first direction in response to the movement of the dispensing unit in the first direction, and to at least partly cover the opening on their respective sides with respect to the dispensing unit for providing insulation. Preferably, the at least two insulating elements may be attached to each other directly or through an attachment part or parts.

The device may comprise an insulating arrangement. The arrangement may comprise the insulating element or elements, and moving means for moving the insulating element or elements with respect to the chamber in the first direction in response to the movement of the dispensing unit in the first direction. The moving means may comprise, for example, a roller or rollers by which the insulating element may be arranged to the device.

Furthermore, the moving means may comprise a frame or fixing means for fixing the insulating elements, such as from its end or ends, to the dispensing unit. However, the moving means may alternatively be such that there may be a transmission mechanism or a separate motor which is configured to move the insulating element in response to the movement of the dispensing unit even if the insulating element and the dispensing unit are not directly attached to each other.

The dispensing unit may be arranged to be moved in the opening in a second direction with respect to the chamber, wherein the second direction is perpendicular to the surface normal and to the first direction, and wherein the insulating element is arranged to be moved with respect to the chamber in response to a movement of the dispensing unit in the second direction, and to at least partly cover the opening for providing insulation. The dispensing unit may be arranged to be moved through the opening in a third direction, wherein the third direction is parallel to the surface normal.

The device may comprise a platform arranged into the chamber, wherein material is configured to be dispensed onto the platform from the outlet for manufacturing a physical object. The platform may be configured to be moved in at least one of the first, second or third directions. Alternatively or in addition, the platform may be rotated or tilted with respect to the chamber and/or the dispensing unit. The platform may be separately heated.

The device comprises a heating element arranged into the chamber. The heating element may be, for example, an electric heating element or a hot air blower or the like. The device may be configured for providing a temperature of at least 130 degrees Celsius into the chamber.

According to a second aspect, a method for manufacturing of a device for additive manufacturing according to the appended claim 13 is provided. The method comprises
- obtaining a chamber comprising a wall and an opening in the wall, the opening defining a surface having a surface normal,
- arranging a dispensing unit comprising an outlet and an inlet for moving in the opening at least in a first direction with respect to the chamber, wherein the first direction is perpendicular to the surface normal, and
- arranging an insulating element for moving with respect to the chamber in response to a movement of the dispensing unit in the first direction, and to at least partly cover the opening for providing insulation.

The method may further comprise arranging a platform into the chamber and configuring material to be dispensed onto the platform from the outlet for additive manufacturing, such as additive manufacturing of any physical 3D object. The material may be, for example, polymer, such as plastic, or metal.

The method comprises arranging a heating element into the chamber for providing heating into the chamber, such as up to at least 130 degrees Celsius.

The present invention provides a device for additive manufacturing and a method for manufacturing the device. The present invention provides advantages over known solutions such that the means for insulation of the chamber is less complex and can easily be maintained and replaced.

Various other advantages will become clear to a skilled person based on the following detailed description.

The expression "a number of' may herein refer to any positive integer starting from one (1).

The expression "a plurality of' may refer to any positive integer starting from two (2), respectively.

The terms "first", "second" and "third" are herein used to distinguish one element from other element, and not to specially prioritize or order them, if not otherwise explicitly stated.

The exemplary embodiments of the present invention presented herein are not to be interpreted to pose limitations to the applicability of the appended claims. The verb "to comprise" is used herein as an open limitation that does not exclude the existence of also un-recited features. The features recited in depending claims are mutually freely combinable unless otherwise explicitly stated.

### BRIEF DESCRIPTION OF FIGURES

Some embodiments of the invention are illustrated by way of example, and not by way of limitation, in the figures of the accompanying drawings.
Figures 1A and 1B illustrate schematically a device according to an embodiment of the present invention.
Figures 2A-2D illustrate schematically a device according to an embodiment of the present invention.
Figure 3 illustrates schematically an insulating element according to an embodiment of the present invention.
Figure 4 illustrates schematically an insulating element according to an embodiment of the present invention.
Figure 5 illustrates schematically an insulating element according to an embodiment of the present invention.
Figure 6 illustrates schematically an insulating element according to an embodiment of the present invention.
Figure 7 illustrates schematically an insulating element according to an embodiment of the present invention.
Figures 8A and 8B illustrate schematically a device according to an embodiment of the present invention.
Figure 9 illustrates schematically a device according to an embodiment of the present invention.
Figure 10 illustrates schematically a device according to an embodiment of the present invention.
Figure 11 illustrates a flow diagram of a method according to an embodiment of the present invention.

### DETAILED DESCRIPTION OF SOME EMBODIMENTS

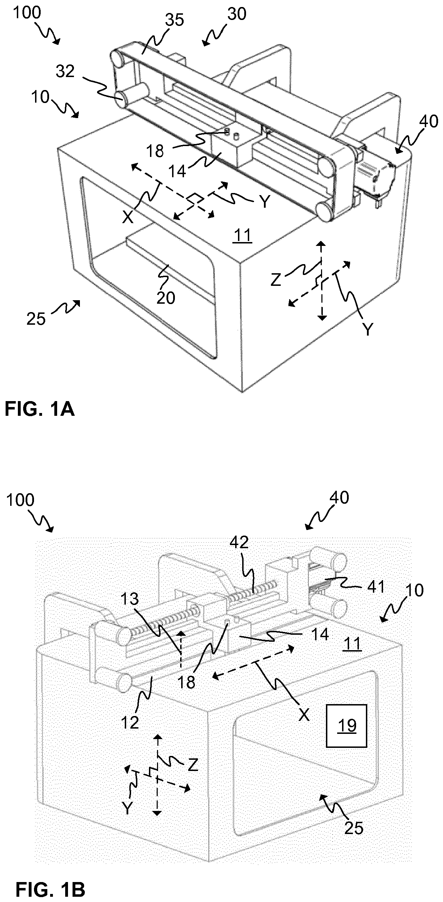

Figures 1A and 1B illustrate schematically a device 100 according to an embodiment of the present invention. The device 100 may comprise a chamber 10 comprising an opening 12 (shown in Fig. 1B) in a wall 11 of the chamber 10. The opening 12 defines a surface having a surface normal 13. The wall 11 may be at any side of the chamber 10, not necessarily on the top as shown in Figs. 1A and 1B.

The device 100 may further comprise a dispensing unit 14 comprising an outlet 16 (not shown in Figs. 1A and 1B, however, in various embodiments residing inside the chamber 10 when being used) and an inlet 18. The dispensing unit 14 may preferably be configured for additive manufacturing of physical objects such that the material for manufacturing is provided into the dispensing unit 14 through the inlet 18 and then provided out of the dispensing unit 14 through the outlet 16, such as, preferably, in the chamber 10. The dispensing unit 14 may preferably be arranged to be moved in the opening 12 at least in a first direction X with respect to the chamber 10, wherein the first direction X is perpendicular to the surface normal 13. The first direction X may essentially be any direction which is substantially perpendicular to the surface normal 13.

"Moving in the first direction X" may herein refer to moving explicitly in the first direction X, that is, in either one of the opposite and parallel directions, or the movement may have at least a component in the first direction X which basically means that the movement is in any direction other than parallel to the surface normal 13.

The materials utilizable in the device 100 according to various embodiments may be, for example, polymers, fiber reinforced polymer composites or metals. Regarding polymers, there are several different types available which may be utilized in connection with the device according to various embodiments described herein. Polymers such as plastics may be utilized. Different types of polymers may exhibit different properties such as related to glass transition temperature and melting point. Examples of utilizable polymers may be Acrylonitrile butadiene styrene (ABS) or Polyethylene terephthalate (PET) or Polylactic acid (PLA). Examples of utilizable polymers may be Acrylonitrile butadiene styrene (ABS) or Polyethylene terephthalate (PET) or Poly(lactic acid) (PLA). Some further examples may be ultra polymers, such as polyimide (PI), polyamideimide (PAI), polyether ether ketone (PEEK), polyetherketoneketone (PEKK); high performance polymers, such as polyethylenimine (PEI), polifenilsulfone (PPSU); mid-range polymers, such as polycarbonate (PC), polyamide (PA), polyoxometalate (POM).

The device 100 comprises at least one insulating element 35 arranged to be moved with respect to the chamber 10 in the first direction X in response to a movement of the dispensing unit 14 in the first direction X, and to at least partly cover the opening 12 for providing insulation. The insulating element 35 has been omitted from Fig. 1B in order to illustrate the opening 12 more clearly. As the opening 12 defines a larger surface with respect to the dispensing unit 14 for enabling the movement of said unit 14 in the opening 12, most of the opening 12 is not occupied by the dispensing unit 14. The non-occupied surface, or the open part, may thus at least partly be covered by the insulating element 35 in order to at least reduce the amount of heat exchange between the inner and the outer side of the chamber 10 through the opening 12.

Furthermore, Figs. 1A and 1B illustrate one exemplary definition of second Y and third Z directions as well. As can be seen, the second direction Y may in some cases be essentially perpendicular with respect to the first direction X and the surface normal 13. Furthermore, the second Y and the third Z directions may preferably be perpendicular with respect to each other, and with respect to the first direction X. The third direction Z may preferably be parallel to the surface normal 13, however, not necessarily.

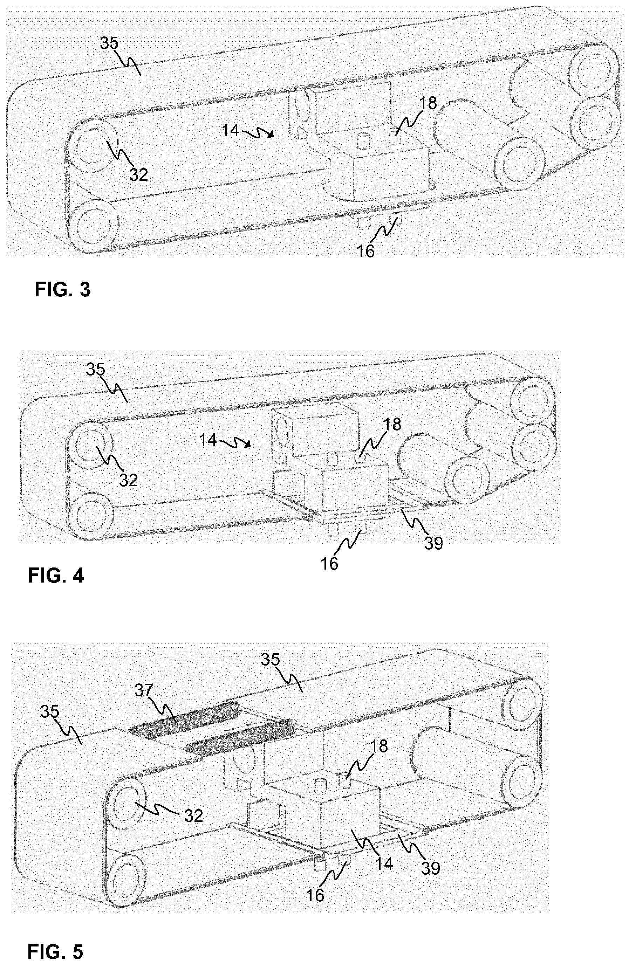

In Figs. 1A and 1B, the device 100 comprises one insulating element 35 which is attached to or at least fixed with respect to the dispensing unit 14 from both of its ends. However, the insulating element 35 may in some embodiments be arranged fixedly or even attached directly only from a first end with respect to the dispensing unit 14. In these embodiments, the insulating element 35 may be, for example, a rigid strip or plate of material, such as of carbon fiber. The insulating element 35 may, alternatively or in addition, be arranged fixedly from a second end, opposite to the first end, with respect to the dispensing unit 14. Preferably, the first and the second end may be attached or arranged fixedly on opposite sides of the dispensing unit 14. "Fixedly" refers herein to a direct contact, that is the insulating element may be attached to the dispensing unit 14 from the first and/or the second end, or to be in contact through a support element 39 at least when the dispensing unit 14 is being moved (some examples shown in Figs. 3-7).

The insulating element 35 in Fig. 1A is a strip of material, such as preferably of thermally insulating material, for example of rubber, being arranged in fixed manner with respect to the dispensing unit 14 from the ends of the element 35. In some embodiments, the material is flexible in order for the element to be arranged in strained manner by the rollers 32, such as four or five rollers, as shown in Fig. 1A. At least one of the rollers 32 may be configured to tighten the element 35, such as by a spring element (not shown). Some examples regarding the material of the insulating element may be aluminum alloys, silicone (polymers), fluoroelastomer, mineral fiber, glass fiber, and carbon fiber. Aluminum alloys may advantageously be used to lower the amount of thermal energy being radiated out of the chamber 10.

In various embodiments, the device 100 may comprise an insulating arrangement 30 comprising the insulating element 35 or elements 35, and moving means for moving the insulating element with respect to the chamber in the first direction X in response to the movement of the dispensing unit 14 in the first direction X. The moving means may comprise a body part, such as being attached to the chamber 10, and, for example, rollers 32 or sliding surfaces, attached or arranged to the body part for enabling the movement or the moving of the insulating element 35 or elements 35 with respect to the chamber 10. According to some embodiments, the rollers 32 or the sliding surfaces may also be arranged to be moved with respect to the chamber 10, for example, for tightening or loosening the insulating element 35 around them.

The at least one insulating element 35 is arranged to be moved as a whole with respect to the chamber. This may essentially entail that the element 35 or elements 35 is/are not attached or fixed with respect to the chamber 10 at any point of the element 35 or elements 35.

According to some preferable embodiments, the device 100 may further comprise a platform 20 arranged into the chamber 10, wherein material, such as polymers for 3D printing, is configured to be dispensed onto the platform 20 from the outlet 16 for manufacturing the physical object.

In some embodiments, the chamber 10 may or may not comprise a second opening 25 providing access into the chamber 10, such as for or in a door being arranged to the chamber 10. The second opening 25 may have a glass or other transparent material defining a window through which the inner side of the chamber 25 may be monitored or inspected.

According to some embodiments, the at least one insulating element 35 comprises a surface which has a surface area which is at least the size or larger than the surface of the open part of the opening 12. The surface of the insulating element 35 may preferably be such that it can cover the open part, that is, the part not being occupied or covered by the dispensing unit 14, at least completely or even a bigger area.

Furthermore, the dispensing unit 14 may be arranged, alternatively or in addition, to be moved in the opening 12 in a second direction Y with respect to the chamber 10. The second direction Y may be perpendicular to the surface normal 13 and to the first direction X. The insulating element 35 may arranged to be moved with respect to the chamber 10 in response to a movement of the dispensing unit 14 in the second direction Y, and to at least partly cover the opening 12 for providing insulation. However, the insulating element 35 may be arranged to be moved only in the first direction X even if the dispensing unit 14 may additionally be moved in the second direction Y.

According to various embodiments, the dispensing unit 14 may be arranged to be moved through the opening 12 in a third direction Z, wherein the third direction Z is parallel to the surface normal 13. This may, in some embodiments, refer to the movement of the dispensing unit 14 for adjusting the height or the distance of the outlet 16 with respect to a platform 20 in the chamber 10. The platform 20 may be separately heated with respect to other parts of the device 100.

According to various embodiments, the dispensing unit 14 may, alternatively or in addition, be arranged to rotate or tilt with respect to the chamber 10. Thus, the dispensing unit 14 may be arranged to be moved linearly in at least one of the first X, the second Y and the third Z directions, however, also or alternatively to be tilted with respect to the horizontal direction, for instance.

In various embodiments, the device 100 may comprise a platform 20 arranged into the chamber 10, wherein material is configured to be dispensed onto the platform 20 from the outlet 16 for manufacturing the physical object. In addition, the platform 20 may be configured to be moved in at least one of the first X, second Y or third Z directions. In Fig. 1A, the platform 20 is a separate element with respect to the chamber 10. In some other embodiments, the floor of the chamber 10 may represent the platform 20 on which the physical object may be additively manufactured or 3D printed on.

The device comprises a heating element 19 arranged into or in connection with the chamber 10, and the device is configured for providing a temperature of at least 130 degrees or at least 200 degrees or even higher than 250 degrees Celsius into the chamber by the heating element 19. The heating element 19 may be, for example, an electric heating element or a hot air blower or the like.

According to various embodiments, the device 100 may comprise motion control elements 40, such as a motor 41 or motors 41, and/or threaded rod(s) 42. The motor 41 may be coupled to a threaded rod 42 to which the dispensing unit 14 may be in connection with, such as through one or more intermediate components. There may be a bolt or a similar component arranged to the threaded rod 42 which may further be coupled to the dispensing unit 14, or the frame thereof, for instance. Thus, the dispensing unit 14 may be configured to be moved by using the motor 41. The motion control elements 40 may be arranged to provide motion of the dispensing unit 14 in at least one of the following: the first X, the second Y, the third Z directions. There may be, for example, one motor 41 and threaded rod 42 arranged to provide motion of the dispensing unit 14 in one direction.

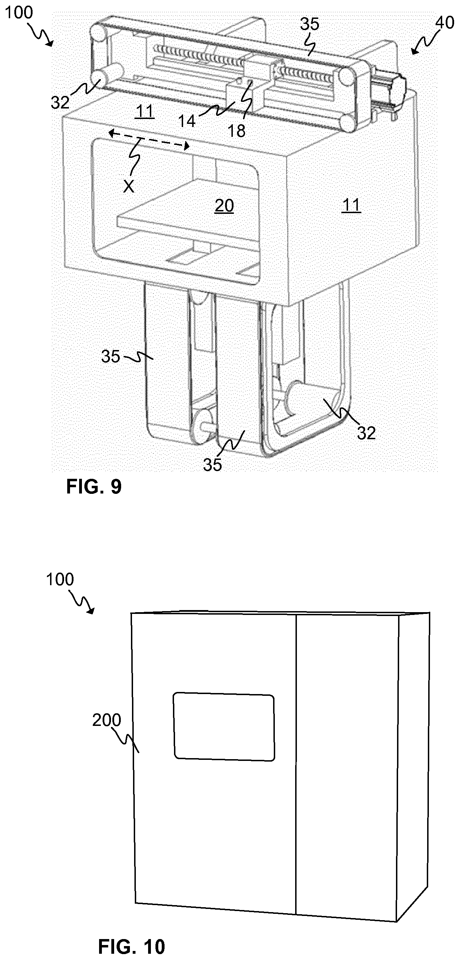

According to a preferable embodiment, the motion control elements 40 may be arranged outside the chamber 10. This provides the advantage that the elements 40 are not subjected to high temperature and the cooling of the elements 40 may be arranged separately with respect to the chamber 10, such as in a space between a wall of the chamber 10 and the housing 200 or cover 200 of the device 100 (see Fig. 10).

Alternatively or in addition, some or all of the motion control elements 40 may be arranged inside the chamber 10. Still further, some or all of the motion control elements 40 producing motion in one direction, such as in the first direction X, may be arranged outside the chamber 10 while the motion control elements 40 of the other direction(s), such as at least one of the second Y and third Z directions, may be arranged into the chamber 10. Other combinations may also be implemented with respect to the location of the motion control elements 40 with respect to the chamber 10.

According to various embodiments, the device 100 may comprise a processing unit, such as a processor or a microcontroller, which may be configured to control the operation of the motion control elements 40. Furthermore, the device 100 may comprise necessary and suitable sensors, for example, for determining the position of the dispensing unit 14 and/or the platform 20. The processing unit may be configured to receive data from the sensors and utilized said data for controlling the motor(s) 41, for instance. Furthermore, the processing unit, which may be comprised in the controlling unit of the device 100, may control the heating element 19 and the temperature of the chamber 10. The controlling unit may comprise one or more processors, one or more memories being volatile or non-volatile for storing portions of computer program code and any data values and possibly one or more user interface units. The mentioned elements may be communicatively coupled to each other with e.g. wirelessly on in wired manner, such as via an internal bus.

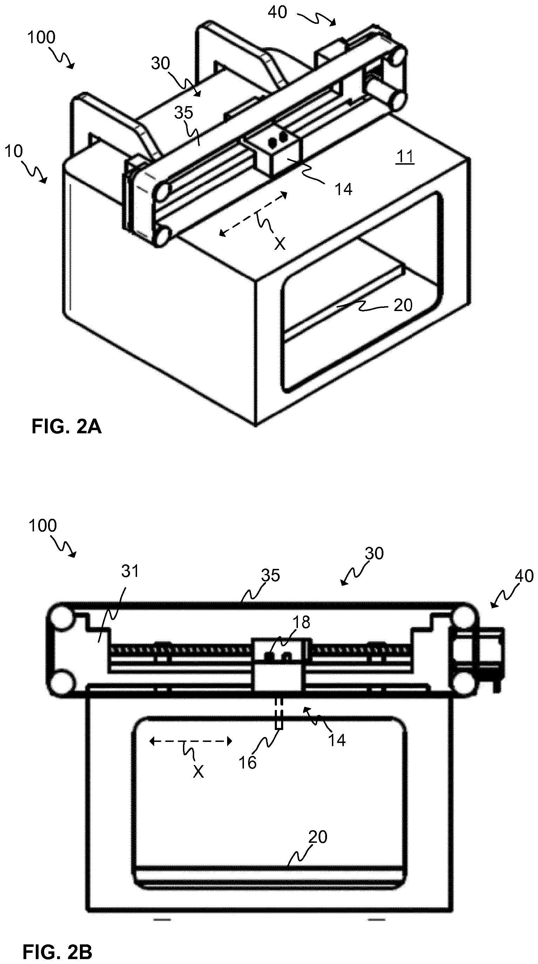

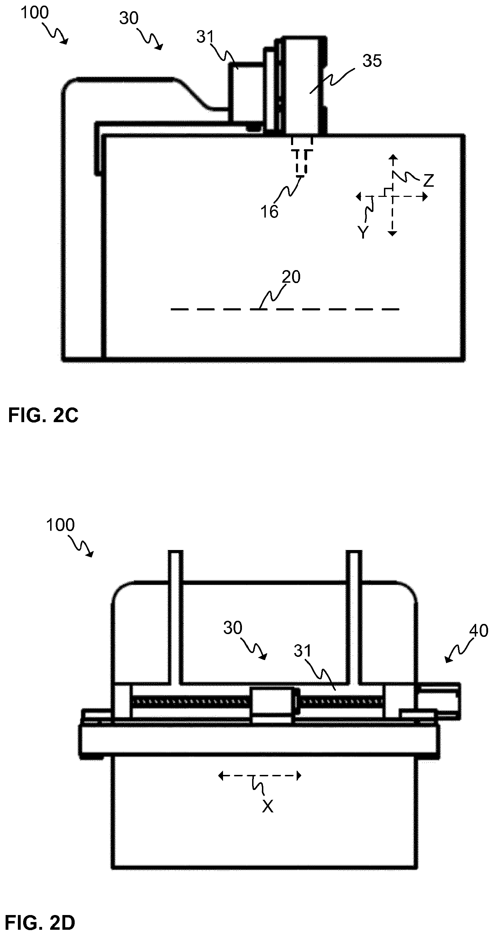

Figures 2A-2D illustrate schematically a device 100 according to an embodiment of the present invention. Fig. 2A illustrates the device 100 from a perspective, Fig. 2B from in front, Fig. 2C from side, and Fig. 2D from above. The device 100 in Figs. 2A-2D may be similar to one illustrated in and described in connection with Figs. 1A and 1B.

Figures 2B and 2C, particularly, illustrate the outlet 16 of the dispensing unit 14 inside the chamber 10. Furthermore, Figs. 2A, 2C and 2D illustrate the body part of the insulating arrangement 30. The body part may, as clearly shown in Fig. 2C, comprise a portion which extends to back wall of the chamber 10. The insulating arrangement 30 may, however, comprise such moving means that enable the movement of the insulating element 35 or elements 35 in any two or all three of the first X, second Y and third Z directions.

Figure 3 illustrates schematically an insulating element 35 according to an embodiment of the present invention. The insulating element 35 may include an opening into which the dispensing unit 14 is arranged in. The element 35 may be arranged to be enabled to move by five rollers 32, however, there could be two, three, or four rollers 32 as well. The insulating element 35 may be arranged to move such that the dispensing unit 14, when being moved, becomes in contact with the edge of the opening of the insulating element 35, and pushes the insulating element 35.

Figure 4 illustrates schematically an insulating element 35 according to an embodiment of the present invention. The insulating element 35 may be attached from both of its end to a support element 39, which, in this case, is a flange or collar being arranged substantially around the dispensing unit 14. The support element 39 may preferably be attached to the dispensing unit 14 such that it allows the movement of the dispensing unit 14 in directions parallel to the surface normal 13 of the opening 12. The support element 39 may be unattached with respect to the dispensing unit 14 in which case the insulating element 35 may be arranged to move such that the dispensing unit 14, when being moved, becomes in contact with the support element 39, pushes the support element 39 and, thus, also the insulating element 35. In the embodiment shown in Fig. 4, the insulating arrangement 30 comprises five rollers 32 through which the insulating element 35 is arranged movable into the device 100, wherein at least one of the rollers 32 may be configured to tighten the insulating element 35, such as by a spring element.

Figure 5 illustrates schematically an insulating element 35 or elements 35 according to an embodiment of the present invention. The device 100 comprises, according to Fig. 5, two insulating elements 35 attached to each other by attachment parts 37 and four rollers 32 for enabling the movement of the insulating elements 35. The attachment parts 37 in this case are springs or spring elements which may be used to absorb some of the vibrations due to the moving the insulating element 35. Still further, such attachment part 37 tighten the insulating element(s) 35 and maintain it or them in tensed condition, such as even stretched a bit. The at least two insulating elements 35 may be arranged essentially in opposite sides of the dispensing unit 14 to cover the parts of the opening 12 on said opposite sides of the dispensing unit 14. Both of the said elements 35 may preferably be arranged to be moved with respect to the chamber 10 in the first direction X in response to the movement of the dispensing unit 14 in the first direction X, and to at least partly cover the opening 12 on their respective sides with respect to the dispensing unit 14 for providing insulation. The at least two insulating elements 35 may alternatively be attached to each other directly from their ends, thus forming essentially a single insulating element 35.

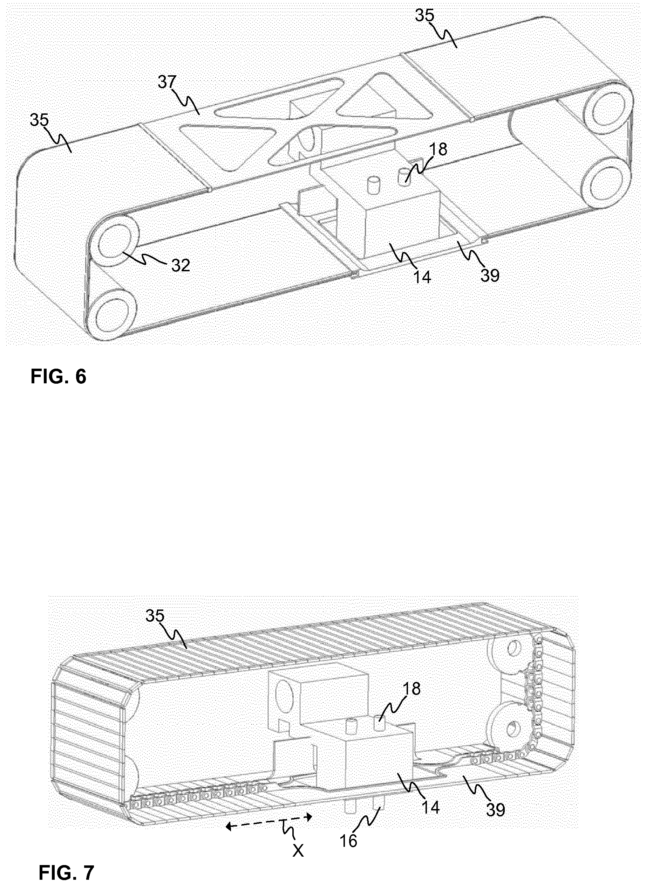

Figure 6 illustrates schematically an insulating element 35 or elements 35 according to an embodiment of the present invention. Fig. 6 illustrates an embodiment in which a single attachment part 37 is utilized to attach the insulating elements 35 to each other. The single attachment part 37 may be rigid, such as of plastic or of metal, or flexible, such as of rubber.

Figure 7 illustrates schematically an insulating element 35 or elements 35 according to an embodiment of the present invention. The insulating element 35 comprises a plurality of insulating element parts, such as slats or strips of material. According to some embodiments, the insulating element 35 may also comprise an attachment part as described hereinbefore. The insulating element 35 may be arranged to be moved by moving means comprising at least two, preferably four, cogwheels and a chain. Consecutive slats may be attached to each other in a way that enables moving of said slats with respect to each other at least in positions of cogwheels so that the insulating element 35 bends. The insulating element 35, or the parts thereof, are preferably attached to the chain. According to an embodiment, the insulating element 35 of Fig. 7 is a single-piece insulating element 35 manufactured of flexible material, wherein the slats are defined by thicker material portion with respect to the space between two consecutive slats which are defined by less thick material portion. According to one embodiment, the slats may be separate with respect to each other, however, forming substantially continuous surface in direct portions of the insulating element 35, such as on the opening 12, that is in this case with respect to the first direction X. The cogwheels may be configured to operate in similar manner as the rollers 32 in embodiments illustrated in Figs. 1A-6.

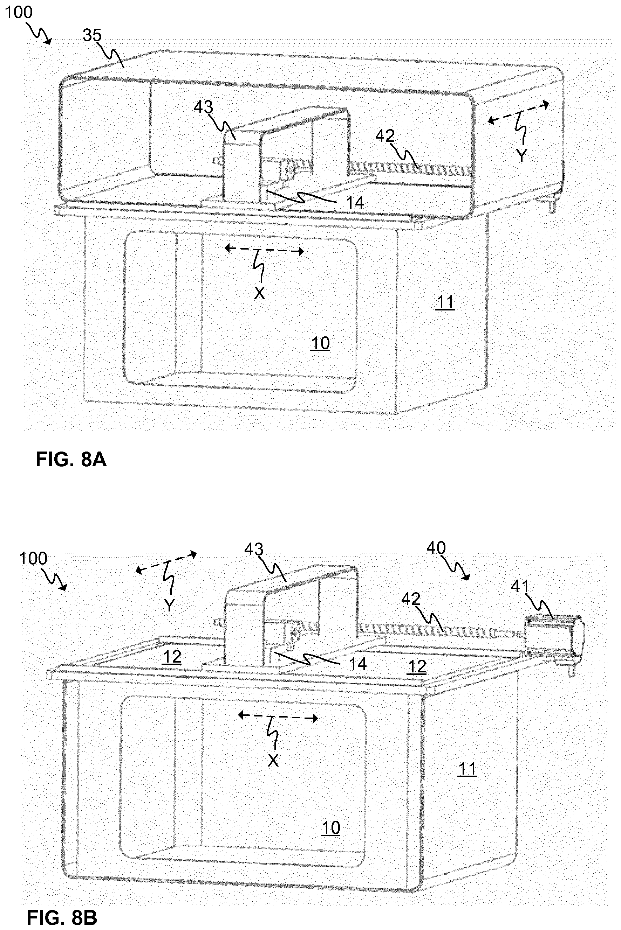

Figures 8A and 8B illustrate schematically a device 100, or at least a part thereof, according to an embodiment of the present invention. The device 100 may comprise a chamber 10 comprising an opening 12 in a wall 11 of the chamber 10. The opening 12 defines a surface having a surface normal 13. The wall 11 may be at any side of the chamber 10. In Fig. 8A, the insulating element 35 is shown arranged on the top of the device 100. In Fig. 8B, the insulating element 35 is omitted in order to show other details of the device 100.

As can be seen in Figs. 8A and 8B, the insulating element 35 may be arranged to cover, and thus provide insulation, at least at one side of the chamber 10 substantially over to whole surface area of the wall 11. In Figs. 8A and 8B, the dispensing unit 14 may be configured to move within its frame 43 in one direction, that is, for example, in the second direction Y, being perpendicular with respect to the first direction X. The insulating element 35, in this case, may be arranged to move in the first direction X.

The frame 43, in which the dispensing unit 14 may be comprised in and/or coupled to, may be configured to move by motion control elements 40. The dispensing unit 14 may, thus, be arranged to move with the frame 43 in at least one direction, that is, in Fig. 9 in the first direction X. The insulating element 35 may thus alternatively be configured to be moved along the frame 43. Furthermore, as described hereinbefore, the dispensing unit 14 may further be configured to be moved in another direction, such as in the second direction Y, with respect to the frame 43 by, for example, further motion control elements comprised in the frame 43. The frame 43 shown in Fig. 9 and presented herein may be utilized also in embodiments shown in Figs. 1A-7 and with other embodiments described herein.

Figure 9 illustrates schematically a device 100, or at least a part thereof, according to an embodiment of the present invention. The device 100 may comprise an insulating element 35 arranged to cover an opening in the wall 11 of the chamber 10. Furthermore, the dispensing unit 14 may be arranged to move at least in one direction, such as in the first direction X and the insulating element 35 may be arranged to move in response to the movement of the dispensing unit 14. The dispensing unit 14 may be arranged to be moved in at least one direction, for example, in the longitudinal direction of the opening 12, in this case the first direction X.

According to various embodiments, however, the platform 20 may, alternatively or in addition, be arranged to be moved. As illustrated in Fig. 9, the platform 20 may be arranged to be moved in one or two directions, such as at least in the second Y and, optionally, the third Z directions. A further insulating element 35 according to various embodiments may be arranged to cover opening(s) in the wall 11 of the chamber 10 in connection with the movement of the platform 20. Said opening(s) may then, in various embodiments, be at a different portion of the wall 11 with respect to the opening 12 related to the movement of the dispensing unit 14.

According to various embodiments, the platform 20 may, alternatively or in addition, be arranged to rotate or tilt. Thus, the platform 20 may be arranged to be moved linearly in at least one of the first X, the second Y and the third Z directions, however, also or alternatively to be tilted with respect to the horizontal direction, for instance.

Figure 10 illustrates schematically a device 100 according to an embodiment of the present invention. The device 100 may comprise a cover or a housing 200 into which the chamber 10 has been arranged in. The cover 200 may comprise a common wall with the chamber 10, such as a door through which an additively manufactured object can be taken out of the chamber 10. Preferably, there may be a space between the chamber 10 and the housing 200 inside on which the dispensing unit 14 may be moved.

According to various embodiments, motion control elements 40 for moving the dispensing unit 14 and/or the platform 20 may be arranged outside of the chamber 10 and are not, therefore, subject to the elevated temperature, such as at least 130 or at least 200 degrees Celsius, inside the chamber 10. The motion control elements 40 may comprise, for example, a motor 41 or motors 41, such as stepped motor(s), utilized for producing the movement in one or two or three directions. The motion control means may also comprise threaded rods 42 or leadscrews 42 and/or belts 42 for translating the movement produced by the motor 41 or motors 41 into suitable movement of the dispensing unit 14 and/or the platform 20.

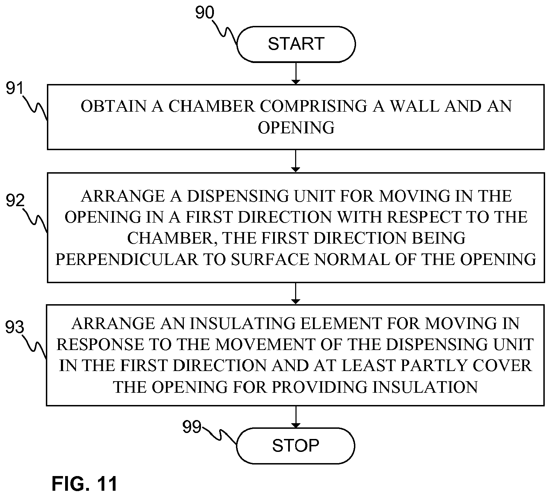

Figure 11 illustrates a flow diagram of a method according to an embodiment of the present invention.

Step 90 refers to a start-up phase of the method. Suitable equipment and components are being obtained and systems assembled and configured for operation. The may entail, for example, to configure the motion control elements 40 for producing desired movement of the dispensing unit 14 and/or the platform 20.

Step 91 may refer to obtaining a chamber 10 comprising a wall 11 and an opening 12 in the wall 11, the opening 12 defining a surface having a surface normal 13. The chamber 10 may be of any suitable material, such as of metal or carbon fiber. Preferably the chamber 10, particularly the walls thereof, should withstand temperatures at least in the range of 130 or at least 200 degrees Celsius or even higher, for example, 250 degrees Celsius.

Step 92 may refer to arranging a dispensing unit 14 comprising an outlet 16 and an inlet 18 for moving in the opening 12 at least in a first direction X with respect to the chamber 10, wherein the first direction X is perpendicular to the surface normal 13. The first direction X may be in the plane defined by the top wall of the chamber 10, for instance.

Step 93 refers to arranging an insulating element 3 5 for moving with respect to the chamber 10 in response to a movement of the dispensing unit 14 in the first direction X, and to at least partly cover the opening 12 for providing insulation. Step 93 may also include arranging the moving means of the insulating element 35 or elements 35 such as illustrated and described in connection with embodiments of Figs. 1A-9.

Method execution is stopped at step 99.

According to a preferable embodiment, the method may comprise arranging a platform 20 into the chamber 10 and configuring material, such as by melting polymer or metal filament, to be dispensed onto the platform 20 from the outlet 16 for additive manufacturing.

According to an embodiment, the method may further comprise arranging a heating element 19, such as an electrical heating element or a hot air blower into the chamber 10 for increasing the temperature inside the chamber 10.

The specific examples provided in the description given above should not be construed as limiting the applicability and/or the interpretation of the appended claims. Lists and groups of examples provided in the description given above are not exhaustive unless otherwise explicitly stated.

## Claims

1. A device (100) for additive manufacturing, such as 3D printing, the device (100) comprising
- a chamber (10) comprising an opening (12) in a wall (11) of the chamber (10), the opening (12) defining a surface having a surface normal (13),
- a heating element (19) arranged into or in connection with the chamber (10) for providing heating into the chamber (10),
- a dispensing unit (14) comprising an outlet (16) and an inlet (18), wherein the outlet (16) is arranged to be hotter than the inlet (18) to heat or at least partly melt material being dispensed by the dispensing unit (14) via the opening (12), wherein the dispensing unit (14) is arranged to be moved in the opening (12) at least in a first direction (X) with respect to the chamber (10), wherein the first direction (X) is perpendicular to the surface normal (13), **characterised in that** the device comprises:
- at least one insulating element (35) being a separate element with respect to the chamber (10) and arranged to be moved as a whole with respect to the chamber (10) in the first direction (X) in response to a movement of the dispensing unit (14) in the first direction (X), and to at least partly cover the opening (12) for providing insulation relative to the inside of the chamber (10).

2. The device (100) according to claim 1, wherein the at least one insulating element (35) comprises a surface which is at least 50 percent of the size of a surface of an open part of the opening (12), wherein the open part is the part not occupied or covered by the dispensing unit (14).

3. The device (100) according to any one of the preceding claims, wherein the at least one insulating element (35) is a strip.

4. The device (100) according to claim 3, wherein the strip is flexible.

5. The device (100) according to claim 3 or 4, wherein the strip is of thermally insulating material.

6. The device (100) according to any one of the preceding claims, wherein the insulating element (35) is arranged fixedly from a first end with respect to the dispensing unit (14).

7. The device (100) according to claim 6, wherein the insulating element (35) is attached to the dispensing unit (14) from the first end.

8. The device (100) according to any one of the preceding claims, comprising an insulating arrangement comprising the insulating element (35) and moving means for moving the insulating element (35) with respect to the chamber (10) in the first direction (X) in response to the movement of the dispensing unit (14) in the first direction (X).

9. The device (100) according to any one of the preceding claims, wherein the dispensing unit (14) is arranged to be moved in the opening (12) in a second direction (Y) with respect to the chamber (10), wherein the second direction (Y) is perpendicular to the surface normal (13) and to the first direction (X), and wherein the thermal insulating element (35) is arranged to be moved with respect to the chamber (10) in response to a movement of the dispensing unit (14) in the second direction (Y), and to at least partly cover the opening (12) for providing thermal insulation.

10. The device (100) according to any one of the preceding claims, wherein the dispensing unit (14) is arranged to be moved through the opening (12) in a third direction (Z), wherein the third direction (Z) is parallel to the surface normal (13).

11. The device (100) according to any one of the preceding claims, wherein the device (100) comprises a platform (20) arranged into the chamber (10), wherein material is configured to be dispensed onto the platform (20) from the outlet (16) for manufacturing a physical object, and the platform (20) is configured to be moved in at least one of the first (X), second (Y) or third (Z) directions.

12. The device (100) according to any one of the preceding claims, configured for providing a temperature of at least 130 degrees Celsius into the chamber by the heating element.

13. A method for manufacturing of a device (100) for additive manufacturing of a physical object, the method comprising
- obtaining (91) a chamber (10) comprising a wall (11) and an opening (12) in the wall (11), the opening (12) defining a surface having a surface normal (13),
- obtaining a heating element (19) and arranging the heating element (19) into or in connection with the chamber (10) for providing heating into the chamber (10),
- arranging (92) a dispensing unit (14) comprising an outlet (16) and an inlet (18) for moving in the opening (12) at least in a first direction (X) with respect to the chamber (10), wherein the first direction (X) is perpendicular to the surface normal (13), and wherein the outlet (16) is arranged to become hotter than the inlet (18) to heat or at least partly melt material being dispensed by the dispensing unit (14) via the opening (12), and
- arranging (93) an insulating element (35) for moving as a whole with respect to the chamber (10) in response to a movement of the dispensing unit (14) in the first direction (X), and to at least partly cover the opening (12) for providing insulation relative to the inside of the chamber (10), wherein the insulating element (35) is a separate element with respect to the chamber (10).

14. The method according to claim 13, comprising arranging a platform (20) into the chamber (10) and configuring material to be dispensed onto the platform (20) from the outlet (16) for additive manufacturing.

## Patentansprüche

1. Vorrichtung (100) zur additiven Fertigung, wie 3D-Druck, wobei die Vorrichtung (100) Folgendes umfasst
- eine Kammer (10), die eine Öffnung (12) in einer Wand (11) der Kammer (10) umfasst, wobei die Öffnung (12) eine Fläche mit einer Flächennormalen (13) definiert,
- ein Heizelement (19), das in oder in Verbindung mit der Kammer (10) angeordnet ist, um der Kammer (10) eine Erwärmung bereitzustellen,
- eine Abgabeeinheit (14), die einen Auslass (16) und einen Einlass (18) umfasst, wobei der Auslass (16) so angeordnet ist, dass er heißer ist als der Einlass (18), um von der Abgabeeinheit (14) über die Öffnung (12) abgegebenes Material zu erwärmen oder zumindest teilweise zu schmelzen, wobei die Abgabeeinheit (14) angeordnet ist, um in der Öffnung (12) zumindest in einer ersten Richtung (X) in Bezug auf die Kammer (10) bewegt zu werden, wobei die erste Richtung (X) senkrecht zur Flächennormalen (13) steht, **dadurch gekennzeichnet, dass** die Vorrichtung Folgendes umfasst:
- mindestens ein Isolierelement (35), das ein separates Element in Bezug auf die Kammer (10) ist und dazu angeordnet ist, als Ganzes in Bezug auf die Kammer (10) in der ersten Richtung (X) als Reaktion auf eine Bewegung der Abgabeeinheit (14) in der ersten Richtung (X) bewegt zu werden, und die Öffnung (12) zum Bereitstellen einer Isolierung gegenüber dem Inneren der Kammer (10) zumindest teilweise abzudecken.

2. Vorrichtung (100) nach Anspruch 1, wobei das mindestens eine Isolierelement (35) eine Fläche aufweist, die mindestens 50 Prozent der Größe einer Fläche eines offenen Teils der Öffnung (12) beträgt, wobei der offene Teil der Teil ist, der nicht von der Abgabeeinheit (14) belegt oder abgedeckt ist.

3. Vorrichtung (100) nach einem der vorhergehenden Ansprüche, wobei das mindestens eine Isolierelement (35) ein Streifen ist.

4. Vorrichtung (100) nach Anspruch 3, wobei der Streifen flexibel ist.

5. Vorrichtung (100) nach Anspruch 3 oder 4, wobei der Streifen aus thermisch isolierendem Material besteht.

6. Vorrichtung (100) nach einem der vorhergehenden Ansprüche, wobei das Isolierelement (35) von einem ersten Ende in Bezug auf die Abgabeeinheit (14) fest angeordnet ist.

7. Vorrichtung (100) nach Anspruch 6, wobei das Isolierelement (35) von dem ersten Ende her an der Abgabeeinheit (14) angebracht ist.

8. Vorrichtung (100) nach einem der vorhergehenden Ansprüche, umfassend eine Isolieranordnung, die das Isolierelement (35) und Bewegungsmittel zum Bewegen des Isolierelements (35) in Bezug auf die Kammer (10) in der ersten Richtung (X) als Reaktion auf die Bewegung der Abgabeeinheit (14) in der ersten Richtung (X) umfasst.

9. Vorrichtung (100) nach einem der vorhergehenden Ansprüche, wobei die Abgabeeinheit (14) angeordnet ist, um in der Öffnung (12) in einer zweiten Richtung (Y) in Bezug auf die Kammer (10) bewegt zu werden, wobei die zweite Richtung (Y) senkrecht zur Flächennormalen (13) und zur ersten Richtung (X) ist, und wobei das thermische Isolierelement (35) so angeordnet ist, dass es in Bezug auf die Kammer (10) als Reaktion auf eine Bewegung der Abgabeeinheit (14) in der zweiten Richtung (Y) bewegt wird und die Öffnung (12) zum Bereitstellen einer thermischen Isolierung zumindest teilweise abdeckt.

10. Vorrichtung (100) nach einem der vorhergehenden Ansprüche, wobei die Abgabeeinheit (14) angeordnet ist, um durch die Öffnung (12) in einer dritten Richtung (Z) bewegt zu werden, wobei die dritte Richtung (Z) parallel zur Flächennormalen (13) ist.

11. Vorrichtung (100) nach einem der vorhergehenden Ansprüche, wobei die Vorrichtung (100) eine in der Kammer (10) angeordnete Plattform (20) umfasst, wobei das Material so konfiguriert ist, dass es von dem Auslass (16) auf die Plattform (20) zur Herstellung eines physischen Objekts abgegeben wird, und die Plattform (20) konfiguriert ist, um in mindestens einer der ersten (X), zweiten (Y) oder dritten (Z) Richtung bewegt zu werden.

12. Vorrichtung (100) nach einem der vorhergehenden Ansprüche, die dazu konfiguriert ist, durch das Heizelement eine Temperatur von mindestens 130 Grad Celsius in die Kammer einzubringen.

13. Verfahren zum Herstellen einer Vorrichtung (100) zum additiven Herstellen eines physischen Objekts, wobei das Verfahren Folgendes umfasst
- Erhalten (91) einer Kammer (10), die eine Wand (11) und eine Öffnung (12) in der Wand (11) umfasst, wobei die Öffnung (12) eine Oberfläche mit einer Oberflächennormalen (13) definiert,
- Erhalten eines Heizelements (19) und Anordnen des Heizelements (19) in oder in Verbindung mit der Kammer (10), um eine Erwärmung in der Kammer (10) bereitzustellen,
- Anordnen (92) einer Abgabeeinheit (14), die einen Auslass (16) und einen Einlass (18) umfasst, zum Bewegen in der Öffnung (12) zumindest in einer ersten Richtung (X) in Bezug auf die Kammer (10),
wobei die erste Richtung (X) senkrecht zur Flächennormalen (13) steht, und wobei der Auslass (16) so angeordnet ist, dass er heißer als der Einlass (18) wird, um Material zu erwärmen oder zumindest teilweise zu schmelzen, das von der Abgabeeinheit (14) über die Öffnung (12) abgegeben wird, und
- Anordnen (93) eines Isolierelements (35) zum Bewegen als Ganzes in Bezug auf die Kammer (10) als Reaktion auf eine Bewegung der Abgabeeinheit (14) in der ersten Richtung (X), und um die Öffnung (12) zum Bereitstellen einer Isolierung gegenüber dem Inneren der Kammer (10) zumindest teilweise abzudecken, wobei das Isolierelement (35) ein separates Element in Bezug auf die Kammer (10) ist.

14. Verfahren nach Anspruch 13, umfassend das Anordnen einer Plattform (20) in der Kammer (10), und Konfigurieren von Material, das auf die Plattform (20) von dem Auslass (16) für die additive Fertigung abgegeben werden soll.

## Revendications

1. Dispositif (100) de fabrication additive, telle que l'impression 3D, le dispositif (100) comprenant
- une chambre (10) comprenant une ouverture (12) dans une paroi (11) de la chambre (10), l'ouverture (12) définissant une surface ayant une normale de surface (13),
- un élément chauffant (19) agencé dans ou en liaison avec la chambre (10) pour fournir un chauffage dans la chambre (10),
- une unité de distribution (14) comprenant une sortie (16) et une entrée (18), dans lequel la sortie (16) est agencée pour être plus chaude que l'entrée (18) afin de chauffer ou de fondre au moins partiellement le matériau distribué par l'unité de distribution (14) via l'ouverture (12), dans lequel l'unité de distribution (14) est agencée pour être déplacée dans l'ouverture (12) au moins dans une première direction (X) par rapport à la chambre (10), dans lequel la première direction (X) est perpendiculaire à la normale de surface (13),
**caractérisé en ce que** le dispositif comprend :
- au moins un élément isolant (35) qui est un élément séparé par rapport à la chambre (10) et agencé pour être déplacé dans son ensemble par rapport à la chambre (10) dans la première direction (X) en réponse à un déplacement de l'unité de distribution (14) dans la première direction (X), et pour recouvrir au moins partiellement l'ouverture (12) afin de fournir une isolation par rapport à l'intérieur de la chambre (10).

2. Dispositif (100) selon la revendication 1, dans lequel l'au moins un élément isolant (35) comprend une surface qui représente au moins 50 % de la taille d'une surface d'une partie ouverte de l'ouverture (12), dans lequel la partie ouverte est la partie non occupée ou non couverte par l'unité de distribution (14).

3. Dispositif (100) selon l'une quelconque des revendications précédentes, dans lequel l'au moins un élément isolant (35) est une bande.

4. Dispositif (100) selon la revendication 3, dans lequel la bande est flexible.

5. Dispositif (100) selon la revendication 3 ou 4, dans lequel la bande est en matériau thermiquement isolant.

6. Dispositif (100) selon l'une quelconque des revendications précédentes, dans lequel l'élément isolant (35) est agencé fixement à partir d'une première extrémité par rapport à l'unité de distribution (14).

7. Dispositif (100) selon la revendication 6, dans lequel l'élément isolant (35) est fixé à l'unité de distribution (14) à partir de la première extrémité.

8. Dispositif (100) selon l'une quelconque des revendications précédentes, comprenant un agencement isolant comprenant l'élément isolant (35) et des moyens de déplacement pour déplacer l'élément isolant (35) par rapport à la chambre (10) dans la première direction (X) en réponse au déplacement de l'unité de distribution (14) dans la première direction (X).

9. Dispositif (100) selon l'une quelconque des revendications précédentes, dans lequel l'unité de distribution (14) est agencée pour être déplacée dans l'ouverture (12) dans une deuxième direction (Y) par rapport à la chambre (10), dans lequel la deuxième direction (Y) est perpendiculaire à la normale de surface (13) et à la première direction (X), et dans lequel l'élément d'isolation thermique (35) est agencé pour être déplacé par rapport à la chambre (10) en réponse à un déplacement de l'unité de distribution (14) dans la deuxième direction (Y), et pour recouvrir au moins partiellement l'ouverture (12) pour fournir une isolation thermique.

10. Dispositif (100) selon l'une quelconque des revendications précédentes, dans lequel l'unité de distribution (14) est agencée pour être déplacée à travers l'ouverture (12) dans une troisième direction (Z), dans lequel la troisième direction (Z) est parallèle à la normale de surface (13).

11. Dispositif (100) selon l'une quelconque des revendications précédentes, dans lequel le dispositif (100) comprend une plate-forme (20) agencée dans la chambre (10), dans lequel le matériau est conçu pour être distribué sur la plate-forme (20) à partir de la sortie (16) pour fabriquer un objet physique, et la plate-forme (20) est conçue pour être déplacée dans au moins l'une des première (X), deuxième (Y) ou troisième (Z) directions.

12. Dispositif (100) selon l'une quelconque des revendications précédentes, conçu pour fournir une température d'au moins 130 degrés Celsius dans la chambre par l'élément chauffant.

13. Procédé de fabrication d'un dispositif (100) pour la fabrication additive d'un objet physique, le procédé comprenant
- l'obtention (91) d'une chambre (10) comprenant une paroi (11) et une ouverture (12) dans la paroi (11), l'ouverture (12) définissant une surface ayant une normale de surface (13),
- l'obtention d'un élément chauffant (19) et l'agencement de l'élément chauffant (19) dans ou en liaison avec la chambre (10) pour fournir un chauffage dans la chambre (10),
- l'agencement (92) d'une unité de distribution (14) comprenant une sortie (16) et une entrée (18) pour se déplacer dans l'ouverture (12) au moins dans une première direction (X) par rapport à la chambre (10), dans lequel la première direction (X) est perpendiculaire à la normale de surface (13), et dans lequel la sortie (16) est agencée pour devenir plus chaude que l'entrée (18) afin de chauffer ou de fondre au moins partiellement le matériau distribué par l'unité de distribution (14) par l'ouverture (12), et
- l'agencement (93) d'un élément isolant (35) pour se déplacer dans son ensemble par rapport à la chambre (10) en réponse à un déplacement de l'unité de distribution (14) dans la première direction (X), et pour recouvrir au moins partiellement l'ouverture (12) afin de fournir une isolation par rapport à l'intérieur de la chambre (10), dans lequel l'élément isolant (35) est un élément séparé par rapport à la chambre (10).

14. Procédé selon la revendication 13, comprenant l'agencement d'une plate-forme (20) dans la chambre (10) et la configuration du matériau à distribuer sur la plate-forme (20) à partir de la sortie (16) pour la fabrication additive.
